# EUROPÄISCHE PATENTSCHRIFT

(11) **EP 1 042 229 B1**
(45) Veröffentlichungstag und Bekanntmachung des Hinweises auf die Patenterteilung: **27.11.2002**
(21) Anmeldenummer: 98966789.4
(22) Anmeldetag: 16.12.1998
(51) Int. Cl.: C02F 1/24, C02F 1/52, B03D 1/14

(54) **FLOTATIONSREAKTOR SOWIE VERFAHREN ZUR FLOTATION**
FLOTATION REACTOR AND METHOD FOR FLOTATION
REACTEUR DE FLOTTATION ET PROCEDE DE FLOTTATION

(30) Priorität: 20.12.1997 DE 19756962
(43) Veröffentlichungstag der Anmeldung: 11.10.2000
(73) Patentinhaber: Forschungszentrum Jülich GmbH, 52425 Jülich (DE)
(72) Erfinder: OVERATH, Horst, D-52428 Jülich (DE)
(86) Internationale Anmeldenummer: DE9803733
(87) Internationale Veröffentlichungsnummer: WO99032407

(56) Entgegenhaltungen:
- DE-A- 2 446 511
- FR-A- 2 362 653
- US-A- 4 402 920
- US-A- 4 834 872
- US-A- 4 913 826
- PATENT ABSTRACTS OF JAPAN vol. 005, no. 195 (C-083), 11. Dezember 1981 & JP 56 118799 A (MITSUBISHI ELECTRIC CORP), 17. September 1981
- DATABASE WPI Section Ch, Week 8630 Derwent Publications Ltd., London, GB; Class D15, AN 86-194691 XP002103884 & JP 61 129085 A (ATAKA KOGYO KK) , 17. Juni 1986

## Beschreibung

Die Erfindung betrifft einen Flotationsreaktor sowie ein Verfahren zur Flotation.

Nach dem Stand der Technik sind verschiedene Flotationsverfahren bekannt. So werden in der Veröffentlichung "Umweltschutz Entsorgungstechnik" von Prof. Dr. P. Kunz 2. Auflage 1990 Vogel Buchverlag Würzburg unter dem Kapitel "Behandlung von Abwasser" auf Seite 85-86 die Elektroflotation und die Druck- Entspannungsflotation offenbart.
Diese Verfahren sind auch aus dem Werk Wassertechnologie - Fällung, Flockung, Separation von Hermann H. Hahn vom Springer-Verlag Berlin, Heidelberg 1987, bekannt.
Bei der Druck- Entspannungsflotation wird Wasser unter Druck mit einem Gas beaufschlagt und in eine Flotationskammer geleitet. Durch Druckentlastung kommt es zu einer Entspannung des Gases in der Flüssigkeit, das Gas perlt aus und flotiert die aus der Flüssigkeit abzutrennenden Feststoffe, welche von der Oberfläche der Füssigkeit abgetrennt werden können.
Bei der Elektroflotation wird durch eine Elektrolyse ein in der Flüssigkeit aufsteigendes Gas erzeugt, welches den abzutrennenden Feststoff flotiert.

Beide Verfahren werden im industriellen Maßstab betrieben, bergen jedoch erhebliche Nachteile.

So erfordert die Entspannungsflotation aufwendige apparative Maßnahmen sowie druckbeständige Apparaturen.
Durch die rasche Druckentspannung kommt es zu einer schnellen Gasbildung, wodurch Turbulenzen entstehen, welche die Flocken wieder zerreißen können.
Bei beiden Verfahren muß eine Flockungsstufe vorgeschaltet werden, bei der die Feststoffe in einem Flokkungsbehälter ausgefällt, bzw. zu größeren Flocken agglomeriert werden.
Bei der Elektroflotation kommt es, bedingt durch den hohen Stromverbrauch, zu hohen Betriebskosten.
Beide Verfahren haben einen hohen Energieverbrauch.
Die Schrift JP-A-52 126940 offenbart ein Flotationsverfahren, bei dem fein gepudertes MnO₂ als Katalysator verwendet wird, um H₂O₂ zu zersetzen. Bei der Zersetzung wird Sauerstoffgas freigesetzt.
Aus der JP-A-52 111265 ist ein Verfahren zur Behandlung von Schmutzwasser bekannt, bei dem zur Reinigung H₂O₂ bei einem pH von weniger als 5 unter Verwendung von FeSO₄ als Katalysator zugesetzt wird. Die Reaktion wird in einem konventionellen Reaktor durchgeführt.
Die JP-A-56 118799 zeigt ein Abwasserreinigungsverfahren, das ebenfalls von der katalytischen Zersetzung von H₂O₂ Gebrauch macht.
Aus der Veröffentlichung JP-A-61 129085 ist ein Wasserbehandlungsverfahren bekannt, welches bei einem pH-Wert zwischen 4,0-5,0 unter Freisetzung von CO₂ abläuft. Als Flockungsmittel wird FeCl₃ zugesetzt.
Die DE-OS 24 46 511 offenbart ein Verfahren zur Flotation mit Mikroorganismen besetzter Schlammstoffe unter Ausnutzung der Katalase-Aktivität bei dem Sauerstoffblasen durch die enzymatische Spaltung von H₂O₂ entstehen.

Es ist die Aufgabe der Erfindung, ein Verfahren und eine Vorrichtung zu schaffen, die einen wesentlich geringeren Energieverbrauch aufweisen, bei denen auf teure und aufwendige Apparaturen verzichtet werden kann und bei denen ein Zerreißen der Flocken durch Turbulenzen unterbunden werden kann.

Ausgehend vom Oberbegriff des Anspruchs 1 wird die Aufgabe erfindungsgemäß gelöst mit den im kennzeichnenden Teil des Anspruchs 1 angegebenen Merkmalen.

Mit dem erfindungsgemäßen Verfahren und der Vorrichtung ist es nunmehr möglich, Flotationen von Feststoffen auf energieschonende Weise mit geringem apparativen Aufwand durchzuführen. Die Gefahr, die Flocken bei der Flotation zu zerstören, ist sehr gering. Die Flotation erfolgt mit sehr kleinen Gasblasen und ist sehr gleichmäßig und turbulenzarm.

Vorteilhafte Weiterbildungen der Erfindung sind in den Unteranspüchen angegeben.

Die Zeichnung zeigt eine erfindungsgemäße Vorrichtung in schematischer Form.

Es zeigt:

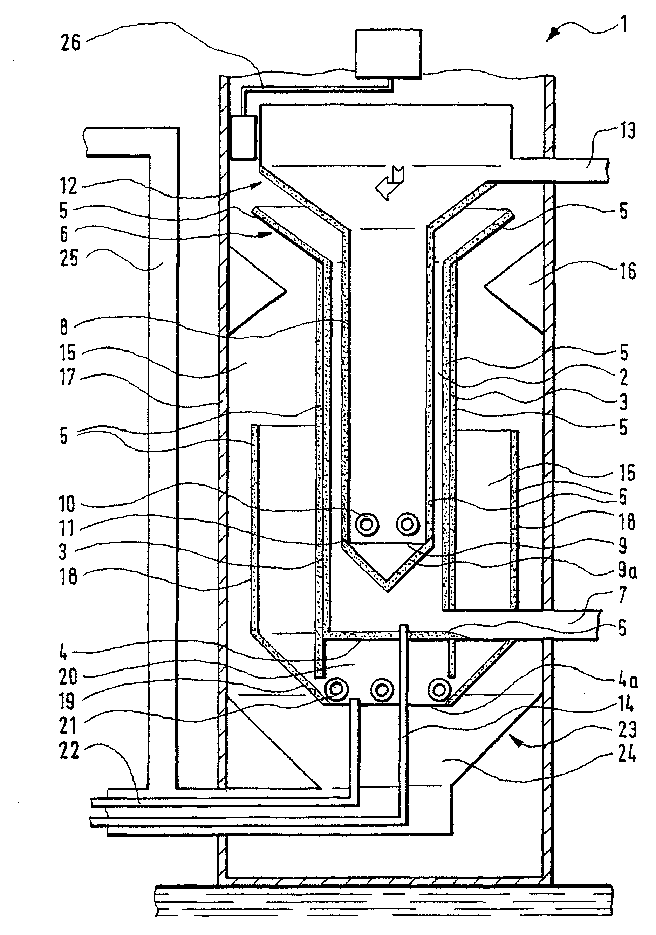

- Fig.1:: Eine erfindungsgemäße Flotationsvorrichtung.

In Figur 1 ist ein Flotationsreaktor 1 abgebildet, der einen ersten Flotationsraum 2 aufweist, dessen Wände 3 und Boden 4 auf der nach innen gerichteten Seite mit einem Katalysator 5 beschichtet sind. Der Flotationsraum 2 ist nach oben hin in Form eines Trichters 6 aufgeweitet und besitzt am unteren Ende einen Einlaß 7 für zu flotierenden Feststoff in einer Flüssigkeit. In dem Flotationsraum 2 befinden sich als Mittel zum Eintragen von zu flotierenden Feststoffen ein senkrecht nach unten gerichtetes Rohr 8, welches an seinem unteren Ende einen Boden 9 besitzt und in Form einer trichterförmigen Verjüngung 9a geschlossen zuläuft. Im unteren Bereich des Rohres 8 befinden sich Austrittsöffnungen 10 für das zu flotierende Gut. Die trichterförmige Verjüngung 9a weist Mittel zum Umleiten einer strömenden Flüssigkeit in Form einer Krempe 11 auf. Das Rohr 8 weitet sich am oberen Ende ebenfalls in Form eines Trichters 12 auf und besitzt einen weiteren Einlaß 13 für zu flotierende Feststoffe in einer Flüssigkeit. Der Flotationsraum 2 besitzt eine Versorgungsleitung 14 für H₂O₂ , die bodenseitig einmündet. Der erste Flotationsraum 2 befindet sich in einem zweiten Flotationsraum 15, der als Mittel zum Aufkonzentrieren von Gasblasen einen Konusring 16 besitzt. Der zweite Flotationsraum 15 wird im wesentlichen durch die Wände 3 des ersten Flotationsraumes 2, im oberen Bereich die Reaktorwände 17, den Konusring 16, den Trichter 6 sowie im unteren Bereich durch eine den ersten Flotationsraum ummantelnde, nach oben offene Wand 18 begrenzt, welche sich nach unten hin mittig über eine Schräge 19 verjüngt und mit dem Boden 4a abschließt. Die Schräge 19 schließt mit dem Boden 4a des ersten Flotationsraumes eine Kammer 20 ein, welche Öffnungen 21 für den Durchtritt von einer Substanz, welche durch eine chemische Reaktion ein Gas freisetzt sowie eine Versorgungsleitung 22 für diese Substanz besitzt. Der zweite Flotationsraum 15 ist ebenfalls innenseitig mit Katalysator 5 beschichtet. Die Beschichtung umfaßt die nach außen gerichtete Seite der Wände 3 des Flotationsraumes 2 sowie die nach innen gerichtete Seite der Wände 18 und der Schräge 19. Der Konusring 16 sowie Bereiche der Reaktorwände 17 können ebenfalls mit Katalysator beschichtet sein.
Der Flotationsreaktor 1 läuft unterhalb der Schräge 19 seinerseits über die Schräge 23 konisch zu, welche die Versorgungsleitung 14 und 22 umschließt. Der von der Schräge 23 umschlossene Raum 24 führt sich außerhalb des Flotationsreaktors 1 in Form eines teleskopartig verlängerbaren U-Rohres 25 fort. Zwischen der Wand 17 und dem Trichter 12 ist ein rotierender Räumer von flotiertem Festgut 26 angebracht.

Bei Betrieb wird das mit dem zu flotierenden Feststoff beschickte Wasser mit einem Flockungsmittel über den Einlaß 13 in den Trichter 12 in einer tangentialen Strömung eingeführt. Durch das Einführen dieser Suspension in Form der tangentialen Strömung wird eine Flokkung derart begünstigt, daß auf das Vorschalten eines Flockungsbehälters verzichtet werden kann, da die Flokken während der Kreisbewegung reifen können. Die zu flotierenden Feststoffe agglomerieren während der Kreisbewegung in dem Trichter 12 besonders gut zu grossen, abwärtssinkenden, flotierbaren Flocken. In dem Trichter 12 wird das Wasser mit dem zu flotierenden Feststoff durch das Rohr 8 nach unten gefördert. Das Wasser durchtritt das Rohr 8 an den Austrittsöffnungen 10 und gelangt so in den ersten Flotationsraum 2, welcher mit einem Katalysator 5 beschichtet ist. Als Katalysator 5 findet Aktivkohle oder Braunstein Verwendung. Durch die Versorgungsleitung 14 wird nun H₂O₂ vorzugsweise an der tiefsten Stelle in den Flotationsraum 2 eingeführt, welches sich an der Katalysatoroberfläche der mit Katalysator 5 beschichteten Wände 3, des Rohres 8 und des Bodens 4 zu Wasser und Sauerstoff zersetzt. Bei dieser Zersetzung bilden sich feinste Gasblasen, welche sich ruhig und turbulenzarm in der Strömung des Wassers nach oben bewegen. Diese ruhige Bewegung der Gasblasen ist für einen zerstörungsfreien Transport der geflockten Feststoffe und eine besonders effektive Flotation verantwortlich. Bei der aufwärts gerichteten Strömung des zu flotierenden Wassers verläuft der Flotationsweg entlang der Verjüngung 9a, welche mit der Krempe 11 ausgestattet ist. Hierdurch wird das Wiedereintreten von geflocktem Feststoff und Gasbläschen in die Austrittsöffnung 10 verhindert. Der sich im unteren Bereich des Rohres 8 befindende Boden 9 verhindert, daß sich Flocken in der Verjüngung 9a absetzen und dort faulen. Das dem Prozeß unterzogene Wasser tritt nach oben aus dem ersten Flotationsraum 2 entlang der Wegstrecke durch die trichterförmige Öffung aus. An dieser Stelle kann der rotierende Räumer von Festgut 26 den geflockten Feststoff abtrennen. Bereits in dieser Verfahrensstufe werden sehr gute Flotationsergebnisse erzielt. Für den Fall, daß jedoch einige Flocken unterhalb des Trichters 6 absinken, erfolgt ein weiterer Eintrag in den zweiten Flotationsraum 15. Hierbei werden die mit Katalysator 5 beaufschlagten Wände 18, die Schräge 19 sowie das Rohr 8 mit weiterem H₂O₂ in Kontakt gebracht, welches durch die Öffnungen 21 in den unteren Bereich des zweiten Flotationsraumes eintritt. Der hierbei entstehende aufsteigende Sauerstoff flotiert in gleicher Weise wie im ersten Flotationsraum 2 die Flocken der in diesem Fall nach unten gerichteten Strömung der aufzubereitenden Füssigkeit, welche zwischen der Reaktorwand 17 und der Wand 18 nach unten austritt. Da der untere Bereich des zweiten Flotationsraumes 15 zwischen der Wand 18 und dem ersten Flotationsraum 2 eine besonders ruhige Zone darstellt, wird das H₂O₂ nicht durch Strömungen verdünnt und die Flotation ist besonders effektiv. Um den Flotationseffekt zu verstärken, befindet sich im oberen Bereich des zweiten Flotationsraumes 15 der Konusring 16, welcher eine Verengung des Strömungsquerschnittes und somit eine Aufkonzentrierung bzw. Verdichtung der nach oben strömenden Sauerstoffblasen bewirkt. Eine zusätzliche Aufkonzentrierung der Sauerstoffblasen entsteht durch das Zusammenführen der Gasblasen aus dem ersten und zweiten Flotationsraum 2 und 15 an der Stelle, an der der Trichter 12 endet. Von dort aus gelangt der Flotatschlamm an die Flüssigkeitsoberfläche und kann dort entfernt werden. Das sehr gute Flotationsergebnis des erfindungegemäßen Verfahrens wird somit besonders begünstigt, da eine gute und reichhaltige Anlagerung von Gasblasen an die Partikel oder Flocken ermöglicht wird. Der Konusring 16 ist in einer besonders bevorzugten Fortbildung der Erfindung in der Höhe verstellbar angebracht, so daß hierdurch nochmals eine Verringerung oder Aufweitung der Durchtrittsfläche zwischen dem Trichter 6 und dem Konusring 16 möglich ist.
Das vom Feststoff befreite Wasser tritt nach unten durch den Raum 24 und das U-Rohr 25 aus dem Flotationsreaktor 1 aus. Durch die Ausbildung der Schräge 23 im Austrittsbereich der der Flotation unterzogenen Flüssigkeit wird ein Absetzen von Partikeln im Raum 24 verhindert, so daß es bei sehr langer Betriebsdauer zu keinerlei Verstopfungen kommt. Das U-Rohr 25 ist teleskopartig nach oben verlängerbar ausgebildet. Hierdurch kann ein erhöhter Flüssigkeitsstand in dem Rohr 8 beziehungsweise Trichter 12 kompensiert werden, wenn die durch den Flotationsreaktor 1 durchgesetzte Flüssigkeitsmenge beispielsweise aufgrund erhöhtem Aufreinigungsbedarf pro Zeiteinheit erhöht werden muß. Der Wasserstand im Flotationsreaktor 1 kann somit zur Abtrennung des Flotatschlammes bei unterschiedlichem Wasserdurchsatz optimal einjustiert werden.
Bei der Flotation von Feststoffen, welche eine aufsteigende Tendenz in der Flüssigkeit aufweisen, ist eine Beschickung des ersten Flotationsraumes 2 mit zu flotierender Flüssigkeit durch den Einlaß 7 möglich. In diesem Fall kann eine Flockung in einem, in der Zeichnung nicht dargestellten, vorgeschalteten Flockungsbehälter durchgeführt werden.
Das erfindungsgemäße Verfahren und die Vorrichtung arbeiten besonders wirtschaftlich. So wird bei einer H₂O₂ Konzentration von 0,06% für eine Dauer von 24 Stunden kontinuierlich Sauerstoff gebildet. Der Betrieb des zweiten, unterhalb des ersten Flotationsraumes 2 angeordneten Flotationsraumes 15 ist fakultativ und hängt von dem Beladungsgrad der erfindungsgemäßen Vorrichtung mit Flocken ab.
Wird das Verfahren mit einer katalytischen Reaktion durchgeführt, die Sauerstoff als Gas bildet, so kann mit dem erfindungsgemäßen Verfahren noch eine zusätzliche Anreicherung von beispielsweise denitrifiziertem Wasser aus Klärstufen einer Abwasserreinigungsanlage mit Sauerstoff stattfinden. Jedoch besteht auch die Möglichkeit, eine andere chemische Reaktion zu nutzen, welche andere Flotationsgase generieren. So können auch katalytische Reaktionen genutzt werden, bei denen beispielsweise Stickstoff gebildet wird, oder es kann eine Zersetzung von Natriumcarbonat an Braunstein unter Bildung von CO₂ zur Flotation genutzt werden. Weiterhin können zur Gasbildung bei der Flotation auch chemische Reaktionen in der zu flotierenden Flüssigkeit ohne Katalysator durchgeführt werden. So können zu flotierende Flüssigkeiten, welche Carbonate, wie Calziumcarbonat enthalten, durch Säurezugabe CO₂ bilden, welches zur Flotation führt.
Bei der Fertigung des erfindungsgemäßen Flotationsreaktors 1 kann der Katalysator mit handelsüblichen Klebstoffen an den Wänden angebracht werden, indem Katalysatorpulver auf eine mit noch nicht durchgehärtetem Klebstoff beaufschlagte Wand gestreut wird. Selbstverständlich können auch fertige Katalysatorplatten in den Flotationsreaktor eingebracht werden.
Die Zugabe eines Flockungsmittels ist fakultativ und von den jeweilig vorliegenden Verhältnissen abhängig. In der Regel wird als Flockungsmittel Polyaluminiumchlorid (PAC) oder FeCl₃ eingesetzt.
Die Zugabe der zu flotierenden Flüssigkeit durch den Einlaß 7 des Rohres 8 führt dazu, daß sich der Flotatschlamm nicht im Zentrum des Flotationsraumes 2 ansammeln kann, wodurch der Räumvorgang begünstigt wird.
Die zur katalytischen Bildung des Gases notwendige Substanz, wie H₂O₂, wird vorzugsweise an der tiefsten Stelle der Flotationsräume 2 und 15 zugegeben, da in diesem Fall die zur Flotation zur Verfügung stehende Strecke maximal ist. Die Öffnungen 10 und 21 können jedoch auch weiter oben angesiedelt sein. Eine Verkürzung des Rohres 8 und damit verbunden eine Verlagerung der Austrittsöffnungen 10 für die zu flotierende Flüssigkeit nach oben, führt zur Ausbildung einer ruhigen Zone im unteren Eintrittsbereich für H₂O₂, so daß an dieser Stelle kaum eine Verdünnung des H₂O₂ stattfindet.
Mit dem erfindungsgemäßen Verfahren und der Vorrichtung können verschiedenartige Partikel oder Biomasse aus Wasser oder jeder anderen Flüssigkeit flotiert werden.
Mit Katalysator beschichtete Elemente in Form von Rohren oder Platten können auch in bereits vorhandene Flotationsreaktoren eingebaut werden. Sie können je nach Anwendungsfall die verfahrenstechnisch aufwendigere Druck-Entspannungs- oder Elektroflotation kostengünstig ersetzen oder die bestehenden Anlagen ergänzen.
Die Einsatzbereiche liegen beispielsweise in der Aufbereitung von Trink- und Abwasser im kommunalen Bereich sowie in der Wasseraufbereitung im Industriebereich. Weiterhin kann das erfindungsgemäße Verfahren und die Vorrichtung als vorgeschaltete Stufe zur Entlastung von Filtern eingesetzt werden.

## Patentansprüche

1. Flotationsreaktor (1) mit einem Flotationsraum (2), einem Einlaß (7,13) für zu flotierende Flüssigkeit, einem Einlaß für die gereinigte Flüssigkeit, einem Ausfluß für den Feststoff und einer Gasquelle,
**dadurch gekennzeichnet,**
**daß** der Flotationsraum (2) mit einem Katalysator beschichtet ist, der eine chemisch katalytische Gasblasenbildung bewirkt.

2. Flotationsreaktor (1) nach Anspruche 1,
**dadurch gekennzeichnet,**
**daß** der Katalysator (5) mindestens eine Komponente aus der Gruppe von Braunstein und Aktivkohle ist.

3. Flotationsreaktor (1) nach Anspruch 1 oder 2,
**dadurch gekennzeichnet,**
**daß** er im Bodenbereich Mittel zum Eintrag einer Substanz (22) besitzt, welche sich an dem Katalysator (5) zu dem Gas umsetzt.

4. Flotationsreaktor (1) nach einem der Ansprüche 1 bis 3,
**dadurch gekennzeichnet,**
**daß** er im Bodenbereich Mittel zum Eintrag der zu flotierenden Flüssigkeit (8,10) besitzt.

5. Flotationsreaktor (1) nach Anspruch 4,
**dadurch gekennzeichnet,**
**daß** das Mittel zum Eintrag des zu flotierenden Wassers ein nach unten gerichtetes Rohr (8) ist, welches am unteren Ende oder im unteren Drittel Austrittsöffnungen (10) aufweist und welches nach oben in Form eines Trichters (12) aufgeweitet ist.

6. Flotationsreaktor (1) nach Anspruch 5,
**dadurch gekennzeichnet,**
**daß** er an dem Trichter(12) Mittel zum tangentialen Einlaß (7) der zu flotierenden Flüssigkeit besitzt.

7. Flotationsreaktor nach Anspruch 5 oder 6,
**dadurch gekennzeichnet,**
**daß** das nach unten gerichtete Rohr (8) eine trichterförmig zulaufende Verjüngung (9a) aufweist.

8. Flotationsreaktor (1) nach einem der Ansprüche 5 bis 7,
**dadurch gekennzeichnet,**
**daß** das Rohr (8) unterhalb der Austrittsöffnungen (10) einen Boden (9) besitzt.

9. Flotationsreaktor (1) nach Anspruch 7 oder 8,
**dadurch gekennzeichnet,**
**daß** die trichterförmige Verjüngung(9) derart ausgebildet ist, daß sie über den Rohrquerschnitt herausragt, so daß in die Austrittsöffnungen (10) keine aufsteigenden Flocken oder Gasbläschen eindringen können.

10. Flotationsreaktor (1) nach einem der Ansprüche 1 bis 9,
**dadurch gekennzeichnet,**
**daß** sich die Wände (3) des Flotationsraumes (2) nach oben hin in Form eines Trichters (6) aufweiten.

11. Flotationsreaktor (1) nach einem der Ansprüche 1 bis 10,
**dadurch gekennzeichnet,**
**daß** sich der Flotationsraum (2) in einem weiteren ihn umgebenden Flotationsraum (15) befindet.

12. Flotationsreaktor (1) nach Anspruch 11,
**dadurch gekennzeichnet,**
**daß** die Wände (18,19,3) des Flotationsraumes(15) mit einem Katalysator (5) beschichtet sind, der eine chemische Reaktion katalysiert, bei der ein Gas entsteht.

13. Flotationsreaktor (1) nach Anspruch 11 oder 12,
**dadurch gekennzeichnet,**
**daß** der Flotationsraum (15) in unteren Bereich Mittel zum Eintrag einer Substanz (21,22) aufweist, die bei der chemischen Reaktion ein Gas bildet.

14. Flotationsreaktor (1) nach einem der Ansprüche 11 bis 13,
**dadurch gekennzeichnet,**
**daß** der Flotationsraum (15) derart ausgebildet ist, daß er den Flotationsraum (2) mit seiner Wand (18) radialsymmetrisch ummantelt, wobei er unterhalb der Mittel zum Eintrag einer Substanz (21), die bei der chemischen Reaktion ein Gas bildet, ein geschlossenes Gefäß bildet, welches in einer Schräge (19) mittig zuläuft und wobei die Wand (18) des Flotationsraumes (15) einen Zwischenraum zur Wand (17) des Flotationsraktors (1) freiläßt.

15. Flotationsreaktor (1) nach einem der Ansprüche 11 bis 14,
**dadurch gekennzeichnet,**
**daß** er unterhalb des Trichters (6) des Flotationsraumes (2) Mittel zum Aufkonzentrieren von Gasblasen (16) aufweist.

16. Flotationsreaktor (1) nach Anspruch 15,
**dadurch gekennzeichnet,**
**daß** das Mittel zum Aufkonzentrieren von Gasblasen ein Konusring (16) ist.

17. Flotationsreaktor (1) nach einem der Ansprüche 11 bis 15,
**dadurch gekennzeichnet,**
**daß** der zweite Flotationsraum (15) am Boden in Form einer Schräge (23) zu einem Austrag für die flotierte Flüssigkeit zuläuft.

18. Flotationsreaktor (1) nach einem der Ansprüche 11 bis 17,
**dadurch gekennzeichnet,**
**daß** sich der Austrag in Form eines U-Rohres (25) fortbildet

19. Flotationsreaktor (1) nach Anspruch 18,
**dadurch gekennzeichnet,**
**daß** das U-Rohr (25) teleskopartig verlängerbar ist.

20. Flotationsreaktor (1) nach einem der Ansprüche 1 bis 19,
**dadurch gekennzeichnet,**
**daß** er Mittel zum Abtrennen des Flotats (26) aufweist.

21. Flotationsverfahren,
**dadurch gekennzeichnet,**
**daß** die zu flotierende Flüssigkeit mit einer mit einem Katalysator beschichteten Oberfläche in Kontakt gebracht wird, wobei der Katalysator eine chemisch katalytische Gasblasenbildung bewirkt.

22. Flotationsverfahren nach Anspruch 21,
**dadurch gekennzeichnet,**
**daß** die chemische Reaktion eine Zersetzung von Wasserstoffperoxid zu Wasser und Sauerstoff ist.

23. Flotationsverfahren nach Anspruch 2 oder 22,
**dadurch gekennzeichnet,**
**daß** als Katalysator Braunstein und/oder Aktivkohle eingesetzt wird.

24. Flotationsverfahren nach einem der Ansprüche 21 bis 23,
**dadurch gekennzeichnet,**
**daß** die Substanz, welche sich in der chemischen Reaktion zu dem Gas zersetzt, in den unteren Bereich eines Flotationsraumes (2) eingeleitet wird.

25. Flotationsverfahren nach Anspruch 24,
**dadurch gekennzeichnet,**
**daß** die zu flotierende Substanz in eine tangentiale Strömung versetzt und anschließend in eine nach unten gerichtete Strömung in ein Mittel zum Eintrag der zu flotierenden Substanz (8) eingebracht wird.

26. Flotationsverfahren nach einem der Ansprüche 21 bis 25,
**dadurch gekennzeichnet,**
**daß** die zu flotierende Substanz in den unteren Bereich des Flotationsraumes (2) eingebracht wird, der mit dem Katalysator (5) beschichtet ist.

27. Flotationsverfahren nach einem der Ansprüche 21 bis 26,
**dadurch gekennzeichnet,**
**daß** die zu flotierende Substanz einem zweiten Flotationsschritt unterworfen wird, bei dem eine Aufkonzentrierung der Gasblasen erfolgt.

28. Flotationsverfahren nach Anspruch 27,
**dadurch gekennzeichnet,**
**daß** die Aufkonzentrierung der Gasblasen durch Zusammenführung der Gasblasenströme aus dem ersten und zweiten Flotationsschritt erfolgt.

29. Flotationsverfahren nach Anspruch 27 oder 28,
**dadurch gekennzeichnet,**
**daß** im zweiten Flotationsschritt eine Verengung der Durchtrittsfläche der Gasblasen entlang ihrer Wegstrecke durchgeführt wird.

30. Flotationsverfahren nach einem der Ansprüche 21 bis 29,
**dadurch gekennzeichnet,**
**daß** die den Flotationsreaktor (1) verlassende Flüssigkeitsmenge durch Variation der Länge eines U-Rohres (25) dem Eintrag an zu flotierender Flüssigkeit in den Flotationsreaktor (1) angepaßt wird.

## Claims

1. Flotation reactor (1) having a flotation chamber (2), an inlet (7, 13) for the liquid to be subjected to flotation, an inlet for the cleaned liquid, an outlet for the solid matter and a gas source, **characterised in that** the flotation chamber (2) is coated with a catalyst which causes chemical catalytic gas bubble formation.

2. Flotation reactor (1) according to Claim 1, **characterised in that** the catalyst (5) is at least one component of the group of manganese dioxide and activated carbon.

3. Flotation reactor (1) according to Claim 1 or 2, **characterised in that** in the floor region it has means for introduction of a substance (22) which is converted to gas at the catalyst (5).

4. Flotation reactor (1) according to one of the claims 1 to 3, **characterised in that** in the floor region it has means for introduction of the liquid (8, 10) to be subjected to flotation.

5. Flotation reactor (1) according to Claim 4, **characterised in that** the means for introduction of the water to be subjected to flotation is a pipe (8) directed downwards, which has outlet openings (10) at its lower end or in the lower third and which expands upwards in the form of a funnel (12).

6. Flotation reactor (1) according to Claim 5, **characterised in that** it has means on the funnel (12) for tangential infeed (7) of the liquid to be subjected to flotation.

7. Flotation reactor (1) according to Claim 5 or 6, **characterised in that** the downward directed pipe (8) has a funnel-shaped narrowing (9a).

8. Flotation reactor (1) according to one of the claims 5 to 7, **characterised in that** below the outlet openings (10), the pipe (8) has a floor (9).

9. Flotation reactor (1) according to Claim 7 or 8, **characterised in that** the funnel-shaped narrowing (9) is formed such that it projects beyond the pipe cross-section, so that no rising flakes or gas bubbles can enter the outlet openings (10).

10. Flotation reactor (1) according to one of the claims 1 to 9, **characterised in that** the walls (3) of the flotation chamber (2) expand upwards in the form of a funnel (6).

11. Flotation reactor (1) according to one of the claims 1 to 10, **characterised in that** the flotation chamber (2) is situated in another flotation chamber (15) surrounding it.

12. Flotation reactor (1) according to Claim 11, **characterised in that** the walls (18, 19, 3) of the flotation chamber (15) are coated with a catalyst (5) which catalyses a chemical reaction that produces a gas.

13. Flotation reactor (1) according to Claim 11 or 12, **characterised in that** the flotation chamber (15) has means in the lower region for introduction of a substance (21, 22) that forms a gas during the chemical reaction.

14. Flotation reactor (1) according to one of the claims 11 to 13, **characterised in that** the flotation chamber (15) is so designed that it surrounds the flotation chamber (2) with its wall (18) in radial symmetrical fashion, whereby below the means for introduction of a substance (21) that forms a gas during the chemical reaction it forms a closed vessel which tapers towards the middle via an incline (19) and whereby the wall (18) of the flotation chamber (15) leaves a free space to the wall (17) of the flotation reactor (1).

15. Flotation reactor (1) according to one of the claims 11 to 14, **characterised in that** below the funnel (6) of the flotation chamber (2) it has means for concentrating gas bubbles (16).

16. Flotation reactor (1) according to Claim 15, **characterised in that** the means for concentrating gas bubbles is a conical ring (16).

17. Flotation reactor (1) according to one of the claims 11 to 15, **characterised in that** the second flotation chamber (15) tapers in the form of an incline (23) towards an outlet for the liquid to be subjected to flotation.

18. Flotation reactor (1) according to one of the claims 11 to 17, **characterised in that** the outlet continues in the form of a U-shaped pipe (25).

19. Flotation reactor (1) according to Claim 18, **characterised in that** the U-shaped pipe (25) may be extended telescopically.

20. Flotation reactor (1) according to one of the claims 1 to 19, **characterised in that** it has means for separating the flotate (26).

21. Flotation method, **characterised in that** the liquid to be subjected to flotation is brought into contact with a surface coated with a catalyst, whereby the catalyst causes chemical catalytic gas bubble formation.

22. Flotation method according to Claim 21, **characterised in that** the chemical reaction is decomposition of hydrogen peroxide to water and oxygen.

23. Flotation method according to Claim 2 or 22, **characterised in that** manganese dioxide and/or activated carbon is used as the catalyst.

24. Flotation method according to one of the claims 21 to 23, **characterised in that** the substance decomposed to gas in the chemical reaction is introduced into the lower region of a flotation chamber (2).

25. Flotation method according to Claim 24, **characterised in that** the substance to be subjected to flotation is brought into a tangential stream and subsequently introduced into a downward directed stream into a means for introduction of the substance (8) to be subjected to flotation.

26. Flotation method according to one of the claims 21 to 25, **characterised in that** the substance to be subject to flotation is introduced into the lower region of the flotation chamber (2), which is coated with the catalyst (5).

27. Flotation method according to one of the claims 21 to 26, **characterised in that** the substance to be subject to flotation is subject to a second flotation step in which a concentration of the gas bubbles takes place.

28. Flotation method according to Claim 27, **characterised in that** the concentration of the gas bubbles is performed by bringing together the gas bubble streams from the first and second flotation steps.

29. Flotation method according to Claim 27 or 28, **characterised in that** in the second flotation step a narrowing of the passage area of the gas bubbles along their pathway is carried out.

30. Flotation method according to one of the claims 21 to 29, **characterised in that** the liquid quantity leaving the flotation reactor (1) is matched to the input into the flotation reactor (1) of liquid to be subjected to flotation by variation of the length of a U-shaped pipe (25).

## Revendications

1. Réacteur (1) de flottation comportant une chambre (2) de flottation, une entrée (7, 13) pour du liquide à faire flotter, une entrée pour le liquide épuré, une sortie pour la substance solide et une source de gaz,
**caractérisé en ce que**
la chambre (2) de flottation est revêtue d'un catalyseur qui provoque une formation catalytique de bulles de gaz par voie chimique.

2. Réacteur (1) de flottation suivant la revendication 1,
**caractérisé en ce que**
le catalyseur (5) est au moins un constituant du groupe du bioxyde de manganèse et du charbon actif.

3. Réacteur (1) de flottation suivant la revendication 1 ou 2,
**caractérisé en ce que**
il a dans la région du fond des moyens pour apporter une substance (22) qui se transforme en le gaz sur le catalyseur (5).

4. Réacteur (1) de flottation suivant l'une des revendications 1 à 3,
**caractérisé en ce que**
il a dans la région du fond des moyens pour apporter le liquide (8, 10) à faire flotter.

5. Réacteur (1) de flottation suivant la revendication 4,
**caractérisé en ce que**
le moyen pour apporter l'eau à faire flotter est un tube (8) dirigé vers le bas qui comporte à l'extrémité inférieure ou dans le tiers inférieur des ouvertures (10) de sortie et qui est élargi vers le haut sous la forme d'un entonnoir (12).

6. Réacteur (1) de flottation suivant la revendication 2,
**caractérisé en ce que**
il a sur l'entonnoir (12) des moyens pour l'entrée (7) tangentielle du liquide à faire flotter.

7. Réacteur de flottation suivant la revendication 5 ou 6,
**caractérisé en ce que**
le tube (8) dirigé vers le bas comporte un rétrécissement (9a) arrivant en entonnoir.

8. Réacteur (1) de flottation suivant l'une des revendications 5 à 7,
**caractérisé en ce que**
le tube (8) a un fond (9) au-dessous des ouvertures (10) de sortie.

9. Réacteur (1) de flottation suivant la revendication 7 ou 8,
**caractérisé en ce que**
le rétrécissement (9) en forme d'entonnoir est conformé de manière à faire saillie au-dessus de la section transversale de tube, si bien que des flocs ou des petites bulles de gaz qui montent ne peuvent pas pénétrer dans les ouvertures (10) de sortie.

10. Réacteur (1) de flottation suivant l'une des revendications 1 à 9,
**caractérisé en ce que**
les parois (3) de la chambre (2) de flottation s'élargissent vers le haut sous la forme d'un entonnoir (6).

11. Réacteur (1) de flottation suivant l'une des revendications 1 à 10,
**caractérisé en ce que**,
la chambre (2) de flottation se trouve dans une autre chambre (15) de flottation qui l'entoure.

12. Réacteur (1) de flottation suivant la revendication 11,
**caractérisé en ce que**
les parois (18, 19, 3) de la chambre (15) de flottation sont revêtues d'un catalyseur (5) qui catalyse une réaction chimique lors de laquelle un gaz se forme.

13. Réacteur (1) de flottation suivant la revendication 11 ou 12,
**caractérisé en ce que**,
la chambre (15) de flottation comporte, dans la région inférieure, des moyens pour apporter une substance (21, 22) qui forme un gaz lors de la réaction chimique.

14. Réacteur (1) de flottation suivant l'une des revendications 11 à 13,
**caractérisé en ce que**,
la chambre (15) de flottation est conformée de manière à envelopper la chambre (2) de flottation avec une symétrie radiale, la chambre (15) de flottation comportant au-dessous des moyens pour apporter une substance (21), qui forme un gaz lors de la réaction chimique, un récipient fermé qui arrive sur un biseau (19) au milieu, et la paroi (18) de la chambre (15) de flottation dégageant un intervalle par rapport à la paroi (17) du réacteur (1) de flottation.

15. Réacteur (1) de flottation suivant l'une des revendications 1 à 14,
**caractérisé en ce que**,
il comporte au-dessous de l'entonnoir (6) de la chambre (2) de flottation des moyens pour concentrer des bulles (16) de gaz.

16. Réacteur (1) de flottation suivant la revendication 15,
**caractérisé en ce que**,
le moyen pour concentrer des bulles de gaz est un anneau (16) conique.

17. Réacteur (1) de flottation suivant l'une des revendications 1 à 15,
**caractérisé en ce que**,
la deuxième chambre (15) de flottation arrive au fond sous la forme d'un biseau (23) pour former une évacuation pour le liquide en flottation.

18. Réacteur (1) de flottation suivant l'une des revendications 1 à 17,
**caractérisé en ce que**
l'évacuation se prolonge sous la forme d'un tube (25) en U.

19. Réacteur (1) de flottation suivant la revendication 18,
**caractérisé en ce que**,
le tube (25) en U peut être déployé de manière télescopique.

20. Réacteur (1) de flottation suivant l'une des revendications 1 à 19,
**caractérisé en ce que**
il comporte des moyens pour séparer le produit (26) de flottation.

21. Dispositif de flottation,
**caractérisé en ce que**
on met le liquide à faire flotter en contact avec une surface revêtue d'un catalyseur provoquant une formation catalytique de bulles de gaz par voie chimique.

22. Dispositif de flottation suivant la revendication 21,
**caractérisé en ce que**
la réaction chimique est une décomposition de peroxyde d'hydrogène en eau et en oxygène.

23. Procédé de flottation suivant la revendication 2 ou 22,
**caractérisé en ce que**
on utilise comme catalyseur du bioxyde de manganèse et/ou du charbon actif.

24. Procédé de flottation suivant l'une des revendications 21 à 23,
**caractérisé en ce que**
la substance qui se décompose pour former le gaz lors de la réaction chimique est introduite dans la région inférieure d'une chambre (2) de flottation.

25. Procédé de flottation suivant la revendication 24,
**caractérisé en ce que**
la substance à faire flotter est mise dans un courant tangentiel et ensuite amenée dans un courant dirigé vers le bas à un moyen pour l'entrée de la substance (8) à faire flotter.

26. Procédé de flottation suivant l'une des revendications 21 à 25,
**caractérisé en ce que**
on introduit la substance à faire flotter dans la région inférieure de la chambre (2) de flottation qui est revêtue du catalyseur (5).

27. Procédé de flottation suivant l'une des revendications 21 à 26,
**caractérisé en ce que**
on soumet la substance à faire flotter à une deuxième étape de flottation lors de laquelle s'effectue une concentration des bulles de gaz.

28. Procédé de flottation suivant la revendication 27,
**caractérisé en ce que**
la concentration des bulles de gaz s'effectue en réunissant les courants de bulles de gaz provenant de la première et de la deuxième étapes de flottation.

29. Procédé de flottation suivant la revendication 27 ou 28,
**caractérisé en ce que**
on réalise à la deuxième étape de flottation un rétrécissement des surfaces de passage des bulles de gaz le long de leur parcours.

30. Procédé de flottation suivant l'une des revendications 21 à 29,
**caractérisé en ce que**
on adapte la quantité de liquide quittant le réacteur (1) de flottation à l'entrée de liquide à faire flotter dans le réacteur (1) de flottation en faisant varier la longueur d'un tube (25) en U.
